# EUROPÄISCHE PATENTSCHRIFT

(11) **EP 1 109 691 B1**
(45) Veröffentlichungstag und Bekanntmachung des Hinweises auf die Patenterteilung: **08.05.2002**
(21) Anmeldenummer: 99968229.7
(22) Anmeldetag: 01.09.1999
(51) Int. Cl.: B60J 7/06

(54) **PLANENBEFESTIGUNG**
TARPAULIN FIXTURE
FIXATION DE BACHE

(30) Priorität: 01.09.1998 DE 19839769
(43) Veröffentlichungstag der Anmeldung: 27.06.2001
(73) Patentinhaber: Edscha LKW-Schiebeverdecke GmbH, 42855 Remscheid (DE)
(72) Erfinder: FLIEGE, Dieter, D-42855 Remscheid (DE); REMMEL, Roger, D-42897 Remscheid (DE); DRASCH, Josef, D-94577 Winzer (DE)
(74) Vertreter: Sparing, Rolf Klaus
(86) Internationale Anmeldenummer: DE9902825
(87) Internationale Veröffentlichungsnummer: WO0012338

(56) Entgegenhaltungen:
- EP-A- 0 459 879
- GB-A- 2 229 404

## Beschreibung

Die Erfindung betrifft eine Einrichtung zum Befestigen einer Seitenwandplane an einem Verdeckgestell nach dem Oberbegriff des Anspruchs 1.

GB-A-2 229 404, die dem Oberbegriff des Anspruchs 1 entspricht, beschreibt eine Befestigung für eine Dachabdeckung, insbesondere eine Plane, bei der ein an den Spriegel angeordnete und in Längsgurten verlagerbare Rollenwagen einen seitlich auskragenden Abschnitt aufweist, an dem auf einem Sockel ein zu einer zentralen Achse drehbarer, U-förmiger Bügel angeordnet ist, welcher eine schlitzförmige Ausnehmung in der Dachplane durchsetzt und durch Verdrehung um 90° das Festklemmen der Plane ermöglicht.

Bei aus der Praxis bekannten Befestigungen bzw. Aufhängungen von Seitenplanen an Verdecken für Fahrzeugaufbauten, insbesondere auch zusammenschiebbaren Verdecken von Fahrzeugaufbauten, werden die Planen vermittels sie durchsetzender Befestigungsmittel, beispielsweise Niete an einem Träger, wie das Befestigungsschild von Hängegleitern oder Spriegelendkappen und dergl. mehr befestigt. In manchen Fällen wurde auch schon vorgesehen, zur Verstärkung der Befestigung Druckverteilerplatten einzusetzen, welche von Nieten oder dergl. Befestigungsmitteln durchgriffen sind und die Haltekraft der Befestigungsmittel großflächig auf die Plane übertragen. Derartige Befestigungen sind zwar für den gewöhnlichen Betrieb eines Nutzfahrzeuges hinreichend sicher, können aber höheren Beanspruchungen nicht mit der erforderlichen Sicherheit standhalten.

Bei anderen aus der Praxis bekannten Befestigungsweisen ist vorgesehen, daß die Plane in ihrem Randbereich mit Ösen ausgestattet ist und diese von den Befestigungsmitteln durchsetzt werden, woraus sicherlich eine Verminderung der Gefahr des Ausreißens des Planenmaterials im Bereich des Durchtritts der Befestigungsmittel resultiert. Höheren Anforderungen an die Festigkeit der Befestigung, wie sie beispielsweise bei einer Bahnverladung des Nutzfahrzeuges aus den bei Gegenzugverkehr auftretenden Windkräften resultieren können, kann keine der bekannten und gebräuchlichen Befestigungsweisen von Seitenwandplanen mit der erforderlichen Sicherheit standhalten.

Es ist die Aufgabe der Erfindung eine Einrichtung zum Befestigen einer Seitenwandplane nach dem Oberbegriff des. Anspruchs 1 zu schaffen, die mit tragbarem Aufwand herstellbar und montierbar ist und hohen Sicherheitsanforderungen genügt.

Diese Aufgabe wird bei der eingangs genannten Einrichtung erfindungsgemäß mit den kennzeichnenden Merkmalen des Anspruchs 1 gelöst.

Die Erfindung schlägt somit generell vor, daß in Abkehr von der bisherigen unmittelbaren Befestigungsweise eine Befestigung über ein metallisches Tragmittel eingesetzt wird. Hierdurch wird vorteilhaft eine Planenbefestigung geschaffen, die den Sicherheitsvorschriften wenigstens aller europäischer Eisenbahnen genügt.

Insbesondere bezieht sich die Erfindung auf eine Befestigung der Plane, welche sich in der günstigsten Ausführungsform dadurch auszeichnet, daß die Plane in ihrem Randbereich durch eine Blechklammer umfaßt und mittels der Blechklammer und eines diese durchsetzenden Befestigungsmittels an dem Spriegel oder dem Rollenwagen bzw. dem Befestigungsschild eines Hängegleiters befestigt wird.

Die Erfindung ist hierbei nicht auf die zwar bevorzugte Verwendung einer Blechklammer beschränkt, sondern umfaßt allgemein jede Gestaltungsform einer Klammer aus metallischem Werkstoff, sofern die Festigkeit des metallischen Werkstoffs hinreichend ist, um die für besondere Transportsysteme, beispielsweise den sog. Huckepack-Transport europäischer Eisenbahnen, vorgegebenen Bedingungen zu erfüllen.

Zur weiteren Erhöhung der Festigkeit der Befestigung der Seitenwandplane kann im weiteren vorgesehen sein, daß die Randverstärkung beispielsweise mit einer Einlage aus zugfestem Material ausgestattet ist.

Eine zumindest für eine Befestigung der Seitenwandplane an einem den Spriegel längsverschiebbar am oberen Längsträger besonders gut geeignete Ausbildung der Planenbefestigung sieht vor, daß die im Bereich des einen Endes des Blechmaterialstreifens vorgesehene Durchtrittsausnehmung für das Befestigungsmittel mit einem Kragen ausgestattet und die im Bereich des anderen Endes des Blechmatenalstreifens vorgesehene Durchtrittsausnehmung den Kragen umfaßt.

Im einzelnen kann bei einer solchen Planenbefestigung zweckmäßigerweise dann weiter vorgesehen sein, daß die beiden Durchtrittsöffnungen gegenüber dem Befestigungsmittel ein Übermaß aufweisen und das Befestigungsmittel vermittels eines Druckverteilerelements, wie einer Beilagscheibe, an dem Metallbügel angreift.

Das die Haltekraft des einen verhältnismäßig kleinen Durchmesser aufweisenden Befestigungselements in verträglicher Weise auf den Metallbügel übertragende Druckverteilerelement ist vorzugsweise topfförmig gestaltet und mittig mit einer Durchtrittsöffnung für ein Niet als nicht lösbares Befestigungsmittel ausgestattet ist.

Das Prinzip der vorgeschlagenen Planenbefestigung beruht auf der Anwendung einer Metallklammer zur Übertragung der Haltekräfte des Befestigungselementes auf die Plane und schließt daher naturgemäß auch andere Formen metallischen Materials als die Form eines Flachmaterials ein, insbesondere dahingehend, daß anstelle eines Blechmatenalstreifens ein Längenabschnitt einer anderen Form metallischen Materials, beispielsweise Rund- oder Vielkantmaterial oder aber Bündel nicht flächenhafter Formen metallischen Materials zur Bildung eines U-förmigen Bügels verwendet werden.

Weitere Vorteile und Merkmale der Erfindung ergeben sich aus der nachfolgenden Beschreibung sowie aus den Unteransprüchen.

Die Erfindung wird nachstehend unter Bezugnahme auf die anliegenden Zeichnungen anhand eines bevorzugten Ausführungsbeispiels einer erfindungsgemäßen Planenbefestigung näher erläutert.
Fig. 1 zeigt eine perspektivische Ansicht eines mit einem Planenaufbau ausgestatteten Fahrzeugaufbaus.
Fig. 2 zeigt einen Querschnitt durch ein bevorzugtes Ausführungsbeispiel einer erfindungsgemäßen Planenbefestigung.
Fig. 3 zeigt eine Draufsicht aus Richtung des Pfeils A aus Fig. 2 auf ein erstes Ende eines einen Bügel bildenden Metallblechzuschnitts.
Fig. 4 zeigt eine Draufsicht aus Richtung des Pfeils A aus Fig. 2 auf ein zweites Ende des einen Bügel bildenden MetaIlblechzschnitts.

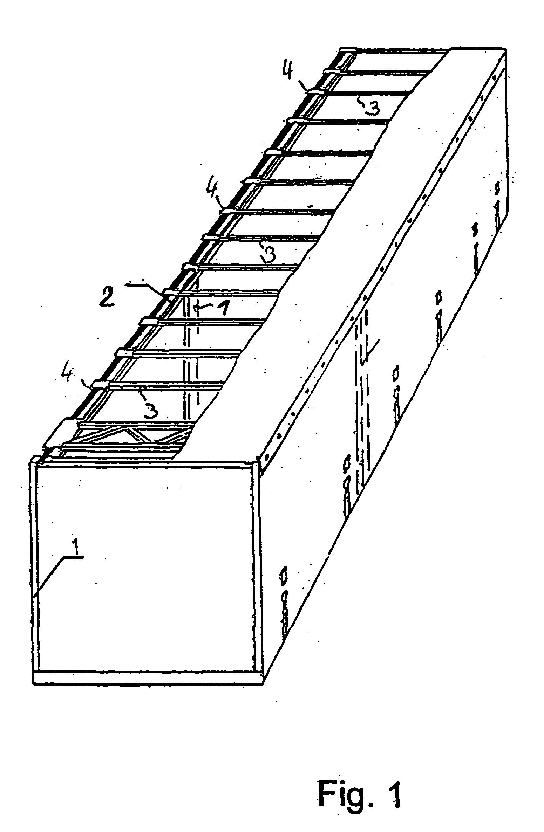

Bei einem in Fig. 1 schematisch dargestellten, mit einem zusammenschiebbaren Verdeck bzw. zusammenschiebbaren Seitenplanen ausgestatteten Fahrzeugaufbau besteht das Verdeckgestell in der Hauptsache aus die Laderaumlänge überspannenden, über aufragende Stützen und Rungen 1 gegen das Fahrzeugchassis abgestützten oberen Längsgurten 2, wobei die eine Dachabdeckung, insbesondere eine Plane abstützenden, in Fahrzeuglängsrichtung verschieblichen Spriegel 3 an den oberen Längsgurten 2 abgestützt sind. Die längsverschieblichen Seitenplanen sind an den Spriegeln 3 aufgehängt.

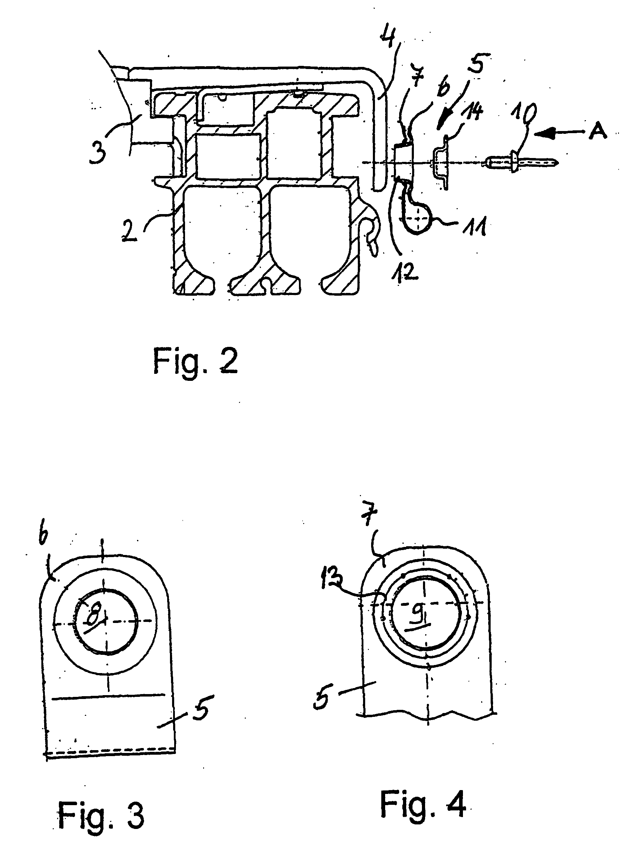

Die in Fig. 2 gezeigte Befestigung der nicht im Einzelnen dargestellten, in ihrem Randbereich bzw. im Bereich von Durchtrittsöffnungen für das Befestigungsmittel mit einer Randverstärkung, beispielsweise einer Einlage aus zugfestem Material, versehene Seitenplane an der Endkappe 4 eines Spriegels 3 umfaßt einen eine Blechklammer bildenden, durch einen U-förmig gebogenen, streifenförmigen Blechmaterialzuschnitt gebildeten Metallbügel 5, welcher im Bereich zweier Enden 6 bzw. 7 des Metallbügels 5 jeweils mit einer Durchtrittsausnehmung 8 bzw. 9 für ein Befestigungsmittel 10 versehen ist

Der Metallbügel 5 weist im Profilgrund seiner U-Form eine der Aufnahme einer Randverstärkung der (nicht dargestellten) Plane dienende Ausbauchung 11 auf. Die im Bereich des ersten Endes 6 des Blechmaterialstreifens 5 vorgesehene Durchtrittsausnehmung 8 für das Befestigungsmittel 10 ist mit einem Kragen 12 ausgestattet, während die im Bereich des zweiten Endes 7 des Blechmaterialstreifens 5 vorgesehene Durchtrittsausnehmung 9 den Kragen 12 umfaßt und im übrigen lediglich mit einer einfachen Durchsetzung 13 ausgebildet ist.

Die beiden Durchtrittsöffnungen 8 und 9 weisen gegenüber dem als Blindniet gestalteten Befestigungsmittel 10 ein Übermaß auf. Das infolge seiner Ausbildung als Blindniet einen geringen Durchmesser aufweisende Befestigungsmittel 10 greift vermittels eines Druckverteilerelements 14 an dem Metallbügel 5 an, wobei das Druckverteilerelement 14 als topfförmig gestaltete Beilagscheibe ausgebildet und mit einer mittig angeordneten Durchtrittsöffnung für das Niet 10 ausgestattet ist.

## Patentansprüche

1. Einrichtung zum Befestigen einer Seitenwandplane an einem Verdeckgestell eines Verdecks für Nutzfahrzeuge, insbesondere eines zusammenschiebbaren Verdecks für Fahrzeugaufbauten und Container,
mit einem Verdeckgestell, umfassend die Laderaumlänge überspannende, über aufragende Stützen und Rungen (1) gegen das Fahrzeugchassis abgestützte oberen Längsgurten (2),
eine Dachabdeckung, insbesondere eine Dachplane, abstützende, in Fahrzeuglängsrichtung verschiebliche Spriegel (3), die derart an den oberen Längsgurten (2) abgestützt sind, daß Stirnenden der Spriegel (3) bzw. auf die Spriegel (3) aufgesetzte Endkappen (4) die Längsgurte (2) seitlich übergreifen, wobei
die Seitenwandplane Ösen oder Ausnehmungen aufweist, die von nicht lösbaren, an in Abständen zueinander angeordneten Trägerelementen (4), wie den Befestigungsschilden von Hängegleitern oder Spriegelendkappen und dgl., befestigten Befestigungsmitteln (10) durch setzt sind,
**dadurch gekennzeichnet,**
**daß** ein U-förmig gebogener Metallbügel (5) im Profilgrund seiner U-Form eine der Aufnahme einer Randverstärkung oder einer der Ösen der Seitenwandplane dienende Ausbauchung (11) aufweist, und
**daß** die beiden Enden (6; 7) des U-förmig gebogenen Metallbügels (5) durch das nicht lösbare Befestigungsmittel (10) quer durchsetzt und an den Trägerelementen (4) befestigt sind.

2. Einrichtung nach Anspruch 1, **dadurch gekennzeichnet, daß** der U-förmige Metallbügel als streifenförmiger Blechmaterialzuschnitt (5) ausgebildet ist, der im Bereich der beiden Enden (6; 7) jeweils mit einer Durchtrittsausnehmung (8; 9) für das Befestigungsmittel (10) versehen ist.

3. Einrichtung nach Anspruch 2, **dadurch gekennzeichnet, daß** die im Bereich des einen Endes (6) des Blechmaterialzuschnitts (5) vorgesehene Durchtrittsausnehmung (8) mit einem Kragen (12) ausgestattet und die im Bereich des anderen Endes (7) des Blechmaterialzuschnitts (5) vorgesehene Durchtrittsausnehmung (9) den Kragen (12) umfaßt.

4. Einrichtung nach Anspruch 2 oder 3, **dadurch gekennzeichnet, daß** die beiden Durchtrittsausnehmungen (8; 9) gegenüber dem Befestigungsmittel (10) ein Übermaß aufweisen und das Befestigungsmittel (10) vermittels eines Druckverteilerelements (14), wie einer Beilagscheibe, an dem Blechmaterialzuschnitt (5) angreift.

5. Einrichtung nach Anspruch 4, **dadurch gekennzeichnet, daß** das Druckverteilerelement (14) topfförmig gestaltet und mittig mit einer Durchtrittsöffnung für ein Niet (10) als nicht lösbares Befestigungsmittel ausgestattet ist.

6. Einrichtung nach Anspruch 1, **dadurch gekennzeichnet, daß** der Metallbügel (5) aus einem Material aus der Gruppe umfassend Rundmaterial, Vielkantmaterial und Bündel nicht flächenhafter Formen ausgewählt ist.

## Claims

1. Device for fastening a side-tarpaulin on a canopy frame of a canopy for commercial vehicles, in particular canopies which can be pushed together for vehicle superstructures and containers, with
a canopy frame comprising upper longitudinal flanges (2) which span the length of the loading compartment and are supported against the vehicle chassis via upwardly protruding supports and stakes (1),
bows (3) which support a roof covering, in particular a tarpaulin, and can be displaced in the longitudinal direction of the vehicle being supported on the upper longitudinal flanges (2) of the canopy frame in such a manner that their ends or the end caps (4) placed onto the bows (3) grip laterally over the longitudinal flanges (2), wherein
the side-wall tarpaulin is provided with eyelets or recesses that are passed through by fastening means (10) fastened to non-releasable support elements (4) which are arranged at distances from one another, such as the fastening plates of hanging sliders or bow end caps and the like,
**characterized in**
**that** a metal clip (5) bent in the shape of a U is provided, in the profile base of its U-shape, with a bulge (11) for receiving an edge reinforcement or one of the eyelets of the side-wall tarpaulin, and
**that** non-releasable fastening means (10) obliquely pass through the two ends (6; 7) of the metal clip (5) bent in the shape of a U and are fastened to the support elements.

2. Device according to claim 1, **characterized in that** the U-shaped metal clip is designed as a strip-shaped, sheet-material blank (5) and in the region of the two ends (6; 7) is provided with a respective passage recess (8; 9) for the fastening means (10).

3. Device according to claim 2, **characterized in that** the passage recess (8) which is provided in the region of one end (6) of the sheet-material blank (5) is provided with a collar (12) and the passage recess (9) which is provided in the region of the other end (7) of the sheet-metal strip (5) encloses the collar (12).

4. Device according to claim 2 or 3, **characterized in that** the two passage recesses (8; 9) have an excess size as compared with the fastening means (10) and the fastening means (10) engages on the metal clip (5) by means of a pressure-distributing element (14), such as a washer.

5. Device according to claim 4, **characterized in that** the pressure-distributing element (14) is of cup-shaped design and is provided in the centre with a passage opening for a rivet (10) as the non-releasable fastening means.

6. Device according to claim 1, **characterized in that** the metal clip (5) is made of a material selected from the group comprising round material, multi-edged material and bundles of non-planar shapes.

## Revendications

1. Dispositif de fixation d'une bâche de paroi latérale sur un coffre de bâche pour bâches de véhicules utilitaires, en particulier, une bâche repliable pour des carrosseries de véhicule et des conteneurs, avec un bâti de bâche comprenant des membrures longitudinales supérieures (2) couvrant la longueur d'espace de chargement, prenant appui contre le châssis du véhicule, par l'intermédiaire d'appuis et de ridelles (1),
des arceaux (3), mobiles dans la direction longitudinale du véhicule, soutenant un recouvrement de toit, en particulier un prélart, arceaux soutenus sur les membrures longitudinales supérieures (2) de manière que des faces frontales des arceaux (3), ou des capuchons d'extrémités (4) posés sur les arceaux (3), entourent latéralement les membrures longitudinales (2), où
la bâche de paroi latérale présente des oeillets ou des évidements, qui sont traversés par des moyens de fixation (10) non désolidarisables, fixés à des éléments supports (4), tels qu'aux panneaux de fixation d'échelles suspendues ou de capuchons d'extrémités d'arceaux ou analogues, disposés les uns par rapport aux autres de façon espacée, **caractérisé en ce qu'**un arceau métallique (5) en forme de grand U présente, au fond de profil de sa forme de grand U, un bossage ou convexité (11) servant à loger un renforcement de bordure ou l'un des oeillets de la bâche de paroi latérale, et
**en ce que** les deux extrémités (6; 7) de l'arceau métallique (5) cintré en forme de grand U sont traversées transversalement par le moyen de fixation (10) non désolidarisable et sont fixées sur les éléments supports (4).

2. Dispositif selon la revendication 1, **caractérisé en ce que** l'arceau métallique en forme de grand U est réalisé sous la forme de découpe de matériau en tôle (5) en forme de bande, qui est munie, dans la zone de chacune des deux extrémités (6; 7), d'un évidement de passage (8; 9) pour le moyen de fixation (10).

3. Dispositif selon la revendication 2, **caractérisé en ce que** l'évidement de passage (8), prévu dans la zone d'une extrémité (6) de la découpe de matériau en tôle (5), est muni d'une collerette (12) et l'évidement de passage (9), prévu dans la zone de l'autre extrémité (7) de la découpe de matériau en tôle (5), entoure la collerette (12).

4. Dispositif selon la revendication 2 ou 3, **caractérisé en ce que** les deux évidements de passage (8; 9) présentent par rapport au moyen de fixation (10) un surdimensionnement et le moyen de fixation (10) agit sur la découpe de matériau (5) à l'aide d'une élément répartiteur de pression (14), tel qu'une rondelle de calage.

5. Dispositif selon la des revendication 4, **caractérisé en ce que** l'élément répartiteur de pression (14) est conformé en pot et est muni centralement d'une ouverture de passage pour un rivet (10) faisant office de moyen de fixation non désolidarisable.

6. Dispositif selon la revendication 1, **caractérisé en ce que** l'arceau métallique (5) est formé en un matériau issu du groupe comprenant les matériaux ronds, les matériaux polygonaux et les bottes ou faisceaux de formes ne présentant pas de surface d'appui.
